(19) Europäisches Patentamt
European Patent Office
Office européen des brevets

(11) **EP 4 546 620 A1**

(12) **EUROPEAN PATENT APPLICATION**

(43) Date of publication:
**30.04.2025 Bulletin 2025/18**

(21) Application number: **24203139.1**

(22) Date of filing: **27.09.2024**

(51) International Patent Classification (IPC):
**H02K 11/20** (2016.01)    **H02K 15/00** (2025.01)

(52) Cooperative Patent Classification (CPC):
**H02K 11/20; H02K 15/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 GB 202316431**

(71) Applicant: **Rolls-Royce plc**
**London N1 9FX (GB)**

(72) Inventors:
• **Chen, Hao**
  **Derby, DE24 8BJ (GB)**
• **Chong, Ellis**
  **Derby, DE24 8BJ (GB)**
• **Boettcher, Carl**
  **Derby, DE24 8BJ (GB)**

(74) Representative: **Rolls-Royce plc**
**Moor Lane (ML-9)**
**PO Box 31**
**Derby DE24 8BJ (GB)**

(54) **ELECTRICAL MACHINE CONDITION MONITORING**

(57) The disclosure relates to electrical machine condition monitoring by placement of a Fibre Bragg Grating (FBG) in the stator of an electrical machine. Example embodiments include an electrical machine (400) comprising: a stator (401) having a plurality of stator teeth (402a-f) having windings around each tooth (402a-f); a rotor (403) rotatably mounted within the stator (401); and an optical fibre (404, 405) mounted to the stator (401), wherein the optical fibre (404, 405) comprises a Fibre Bragg Grating, FBG (406a-c, 407a-c), positioned between an adjacent pair of stator teeth (402c, 402b; 402a, 402f; 402e, 402d) and oriented to measure a tangential strain between the pair of stator teeth (402c, 402b; 402a, 402f; 402e, 402d).

FIG. 4

EP 4 546 620 A1

## Description

### TECHNICAL FIELD

The disclosure relates to electrical machine condition monitoring by placement of a Fibre Bragg Grating (FBG) in the stator of an electrical machine.

### BACKGROUND

Electrical machines, covering electrical motors and generators, may be subject to high and variable loadings during operation. To enable such machines to be designed efficiently and operated safely, it is important that operating parameters during operation are kept within safe limits. A problem with monitoring such machines in operation is that electrical signals can be subject to high levels of noise, resulting in conventional solutions such as strain gauges and temperature sensors being impractical. Electrical machines may also be operated in harsh environments, requiring the use of robust sensing techniques.

A Fibre Bragg Grating is a microstructure that is photo-inscribed in an optical fibre. Small changes in the grating due to strain of the optical fibre can be accurately measured based on the effect of light passing through the grating, enabling an FBG to be used as a sensitive strain gauge. Advantages of using FBGs include their small size, EMI (electromagnetic interference) immunity, possibility of multiplexing and high resistance to harsh environments. FBG-based strain sensors may therefore be advantageous in monitoring of electrical machines when in use.

### SUMMARY

According to a first aspect there is provided an electrical machine comprising:

a stator having a plurality of stator teeth having windings around each tooth;
a rotor rotatably mounted within the stator; and
an optical fibre mounted to the stator,
wherein the optical fibre comprises a Fibre Bragg Grating positioned between an adjacent pair of stator teeth and oriented to measure a tangential strain between the pair of stator teeth.

An advantage of placing the FBG between adjacent stator teeth is that, because these positions have been determined to be in locations where strain during use is maximised, a more sensitive measurement of strain can be determined for the electrical machine when in use.

In an embodiment, the FBG is attached to a yoke of the stator and positioned between roots of the pair of adjacent stator teeth.

In an embodiment, the optical fibre is a first optical fibre attached to and extending around the stator, the first optical fibre comprising a first plurality of FBGs, each FBG being positioned between roots of a pair of adjacent stator teeth.

In an embodiment, the FBG is attached to a bridging element connecting inner ends of the pair of adjacent stator teeth. The optical fibre may be attached to and extend around the stator, the optical fibre comprising a plurality of FBGs, each FBG being attached to a bridging element connecting a pair of adjacent stator teeth.

In an embodiment, the electrical machine further comprises a second optical fibre attached to and extending around the stator and comprising a second plurality of FBGs, each FBG being attached to a bridging element connecting a pair of adjacent stator teeth.

In an embodiment, the electrical machine further comprises a third optical fibre mounted to a winding around a tooth of the stator, the third optical fibre comprising an FBG. The FBG of the third optical fibre may be positioned at an inner side of the winding. The teeth may be rectangular in section, the FBG of the third optical fibre being positioned adjacent a corner of the tooth.

In an embodiment, the electrical machine is a permanent magnet synchronous electrical machine, for example a motor, generator or motor-generator.

According to a second aspect there is provided a method of monitoring an electrical machine comprising:

a stator having a plurality of stator teeth having windings around each tooth;
a rotor rotatably mounted within the stator; and
an optical fibre mounted to the stator, the optical fibre comprising a Fibre Bragg Grating, FBG, positioned between an adjacent pair of stator teeth and oriented to measure a tangential strain between the pair of stator teeth,
the method comprising:

measuring a strain in the stator from the FBG over a frequency range;

determining a first peak strain at a frequency twice that of an operating electrical frequency of the electrical machine; and

based on the first peak strain, determining a presence or absence of a type of fault in the electrical machine.

In an embodiment, the method comprises: determining a ratio between a second peak strain at the operating electrical frequency and the first peak strain; and detecting an inter-turn short circuit fault if the ratio is greater than a predetermined threshold value.

In an embodiment, the predetermined threshold value may be a value between around 0.1 and around 0.7.

In an embodiment, the method comprises: comparing the first peak strain to a predetermined peak strain; and detecting an open circuit fault if the first peak strain is lower than the predetermined peak strain by more than a predetermined factor.

In an embodiment, the predetermined factor is between around 25 and 75% and the predetermined peak strain a measure of the first peak strain in the absence of a fault.

In an embodiment, the method further comprises: comparing the first peak strain to a predetermined peak strain; and detecting an eccentricity fault if the first peak strain is higher than the predetermined peak strain by more than a predetermined factor and a second peak strain at a mechanical frequency of the electrical machine is above a predetermined threshold value.

In an embodiment, the predetermined factor is between around 2 and 3 and the predetermined peak strain a measure of the first peak strain in the absence of a fault.

In an embodiment, the method comprises: comparing the first peak strain to a predetermined peak strain; and detecting a demagnetization fault if the first peak strain is lower than the predetermined peak strain by more than a predetermined factor and a second peak strain at a mechanical frequency of the electrical machine is above a predetermined threshold value.

In an embodiment, the predetermined factor is between around 25 and 50% and the predetermined peak strain a measure of the first peak strain in the absence of a fault.

In an embodiment, the predetermined threshold value is a ratio between the second peak strain and the first peak strain of above around 0.1.

In an embodiment, the method comprises providing an output indication of the presence or absence of a fault in the electrical machine.

According to a third aspect there is provided a system for monitoring an electrical machine, the system comprising:

an electrical machine according to the first aspect; and

a controller,

wherein the controller is configured to perform the method according to the second aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

## BRIEF DESCRIPTION OF THE DRAWINGS

Embodiments will now be described by way of example only with reference to the accompanying drawings, which are purely schematic and not to scale, and in which:

FIG. 1 is a computer model drawing of an example electrical machine with a stator assembly;

FIG. 2 is a computer model representation of strain distribution in an example stator of an electrical machine;

FIG. 3 is a further computer model representation of strain distribution in an example winding of a stator;

FIG. 4 is a schematic sectional drawing of an example electrical machine;

FIG. 5 is a schematic drawing of an example end winding of a stator with an optical fibre having an FBG sensor;

FIG. 6 is a plot of strain at different frequencies and different FBG positions for an example stator during normal operation;

FIG. 7 is a plot of strain at different frequencies and different FBG positions for an example stator during an ITSC fault condition;

FIG. 8 is a computer model output of teeth strain at a fault characteristic frequency along a circumferential direction of a stator;

FIG. 9 is a computer model output of teeth strain at twice a fundamental operating frequency along a circumferential direction of a stator;

**FIG. 10a** is a plot of strain as a function of frequency for different fault conditions in an electrical machine

**FIG. 10b** is another plot of strain as a function of frequency for different fault conditions in an electrical machine;

**FIG. 10c** is another plot of strain as a function of frequency for different fault conditions in an electrical machine;

**FIG. 10d** is another plot of strain as a function of frequency for different fault conditions in an electrical machine;

**FIG. 11** is a schematic diagram illustrating an example system for monitoring a condition of an electrical machine; and

**FIG. 12** is a schematic flow diagram illustrating an example method of monitoring a condition of an electrical machine.

## DETAILED DESCRIPTION

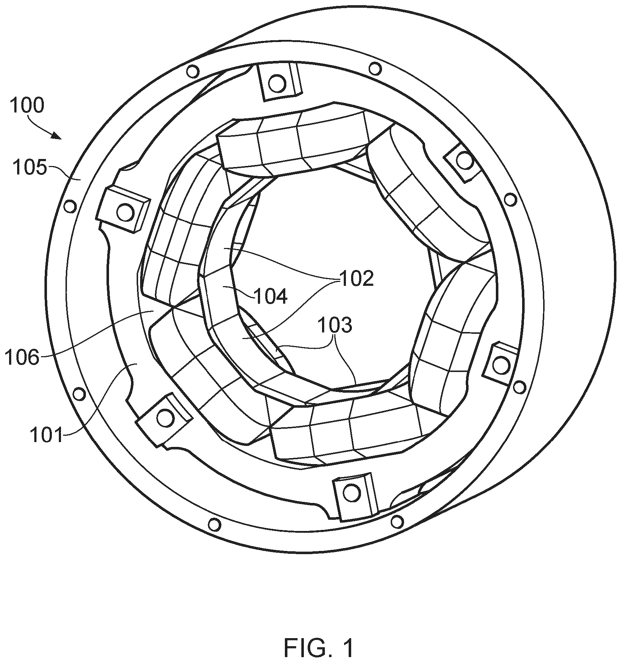

FIG. 1 illustrates an example electrical machine 100 comprising a stator 101 having multiple teeth 102. The electrical machine 100 in this example is a 3-phase, 4-pole, 6-slot high speed PMSM (permanent magnet synchronous motor). Pairs of the stator teeth 102 are joined by wedge-shaped bridging elements 104, together forming an inner circular cylindrical surface, within which is mounted a rotor (not shown in FIG. 1). A winding 103 is provided around each of the teeth 102. Slot liners 106 are also provided between adjacent teeth 102 in the gaps between adjacent windings 103. The stator 101 in this example is mounted within an outer casing 105, which may for example be composed of a structural nonmagnetic material. The stator 101 is typically formed from multiple planar laminations, as for example described in EP3150983.

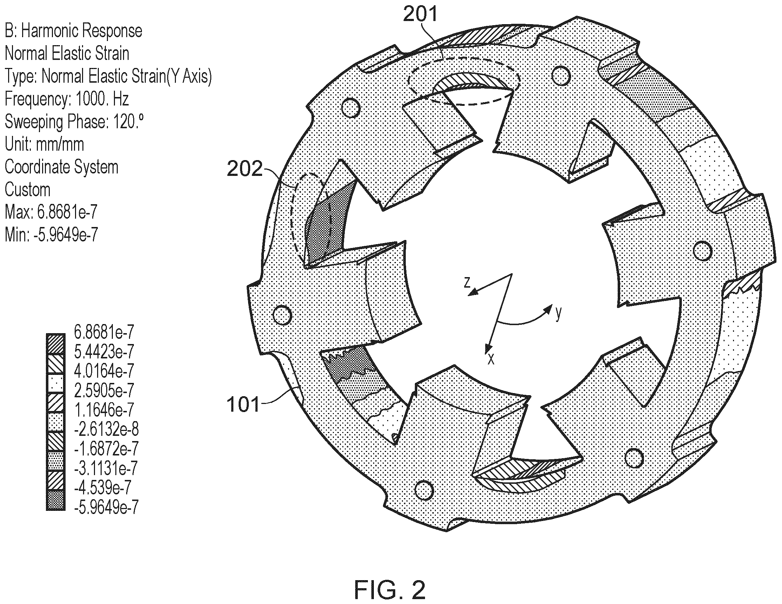

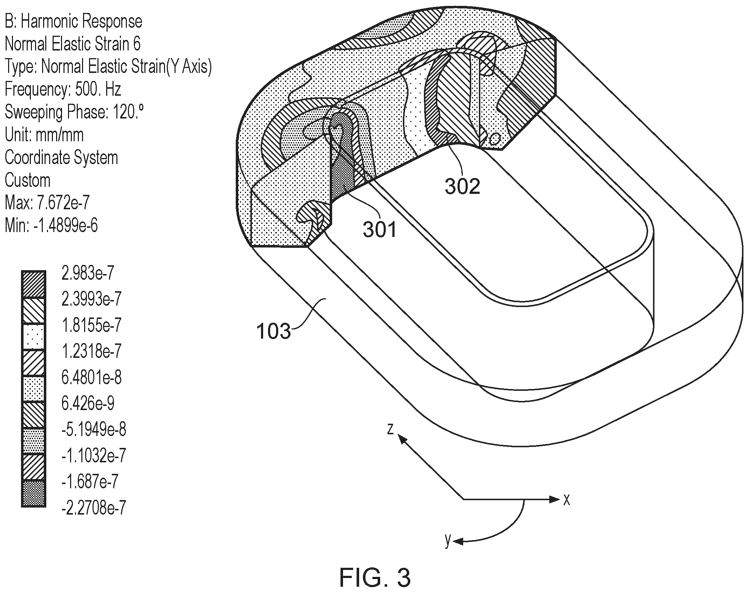

FIG. 2 illustrates an output from a finite element analysis (FEA) ANSYS model evaluating strain distribution in a stator 101 while operating at 15,000 rpm with a current of 60A. FIG. 3 illustrates an output from a model of one of the windings 103 of the stator under the same conditions. In both cases the distribution of strain is shown at twice the electrical frequency $f_{elec}$, the electrical frequency in this case being 500 Hz. This is because, under normal conditions, the electromagnetic force in the air gap between the stator and rotor will have a frequency twice that of the electrical frequency, resulting in strain distributions having the same frequency in the stator and windings.

According to the FEA results, the part of the stator yoke that is closest to the slot is the most sensitive to electromagnetic forces and has the largest strain amplitude, as shown in regions 201 and 202 in FIG. 2, with a first region 201 showing a high positive strain of around 6 to 7 $\times 10^{-7}$ and a second region 202 showing a high negative strain of between around 5 to 6 $\times 10^{-7}$. In the end winding 103, the inner curved parts 301, 302 of the end winding are the most sensitive and show the largest strains of around +/-3 $\times 10^{-7}$.

FBG sensors can be mounted at positions around the stator to measure strain and/or temperature. An FBG sensor works like a wavelength filter. When a broadband light is applied to the optical fibre, only the light within a narrow spectral width centred at Bragg wavelength will be reflected. The value of Bragg wavelength is only affected by applied strain and temperature change due to the photo-elastic and thermo-optic effects. The Bragg wavelength shift can be expressed as:

$$\frac{\Delta \lambda_B}{\lambda_B} = (\alpha + \eta)\Delta T + (1 - \rho_e)\varepsilon_Z \qquad \text{(equation 1)}$$

where $\lambda_B$ is the Bragg wavelength, $\alpha$ the thermal expansion coefficient of silica, $\eta$ the thermo-optic coefficient, $\Delta T$ the temperature change, $\rho_e$ the photo-elastic coefficient and $\varepsilon_Z$ the axial strain of the Bragg grating.

Usually, special methods are needed to compensate the dual-sensitivity to temperature and strain. In electric machines, however, the dual-sensitivity to temperature and strain becomes an advantage instead due to the large frequency difference between vibration and temperature, resulting in the temperature and vibration being readily discriminated by use of a high/low pass filter. Therefore, the AC (fast-changing) and DC (slow-changing) components of FBG signals can be used to indicate vibration and temperature separately and at the same time.

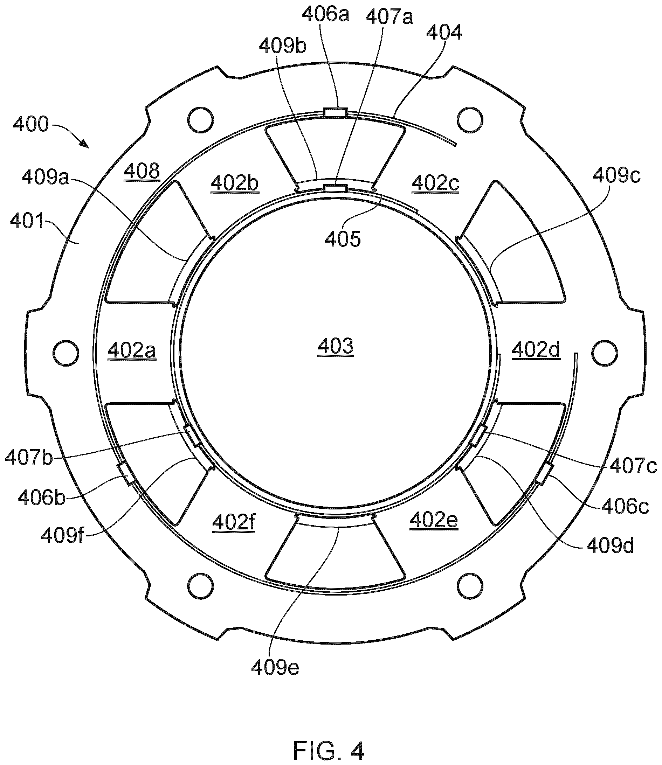

FIG. 4 illustrates in cross-section an example electrical PMSM machine 401 comprising a stator 401 and a rotor 403 rotatably mounted within the stator 401. The stator 401 comprises a plurality of stator teeth 402a-f having windings around each tooth 402a-f. The windings are not shown in FIG. 4, but are similar to the windings 103 in FIG. 1. The inner ends of each of the stator teeth 402a-f are connected by bridging elements 409a-f, each bridging element connecting a pair of adjacent stator teeth 402a-f. The bridging elements 409a-f are in the form of wedges that are fixed between adjacent stator teeth 402a-f following attachment of the windings. In other example, bridging elements 409a-f may be omitted, for example through use of a stator tube instead of bridging elements, or the slots may be left open if, for example air cooling is used.

First and second optical fibres 404, 405 are mounted to the stator 401. The first optical fibre 404 is attached to and extends around the stator 401 and comprises a first plurality of FBGs 406a-c. Each of the first plurality of FBGs 406a-c is positioned between roots of a pair of adjacent stator teeth, in this example between teeth 402b and 402c, between teeth 402d and 402e, and between teeth 402f and 402a. In some examples, only one FBG may be provided, while in others multiple FBGs are provided. In the example shown in FIG. 4, three FBGs 406a-c are provided to measure temperature and strain around the circumference of the stator yoke. More than three FBGs may be provided in other examples, for example between each pair of stator teeth.

Using the first plurality of FBGs 406a-c, the yoke strain in the stator can be directly measured. It is also possible to measure the strain caused by the spatial distribution of electromagnetic force by using multiple FBGs distributed around the stator yoke 408. This method can measure the strain induced by the deformation difference between two adjacent teeth. With the advantage of multiplexing, several FBG sensing elements in a common optical fibre can be mounted around the circumference of the stator yoke 408 to enable measurement of a distributed strain monitoring of the yoke 408.

FIG. 4 also shows a second optical fibre 405 attached to and extending around the stator 401. The second optical fibre 405 comprises a second plurality of FBGs 407a-c. Each of the second plurality of FBGs 407a-c is attached to one of the bridging elements 409a-f. As with the first optical fibre 404, a single FBG may be provided but multiple FBGs 407a-c enable measurement of a distribution of strain and temperature to be taken around the stator 401. Because the fault-related force is unidirectional, the FBG sensors 407a-c mounted on the bridging elements 409a-f are less sensitive to fault-related strains compared with the FBG sensors 406a-c mounted to the stator yoke 408 between the stator teeth. For electrical machines with a large number of slots, resulting in teeth having a more compact spatial distribution, the sensitivity of this measured strain to faults will be further reduced. However, the FBG sensors 407a-c mounted on the bridging elements 409a-f are more sensitive to the fundamental components of the electromagnetic force during operation of the electrical machine 400. The FBG sensors 407a-c are therefore advantageous for indicating machine speed and rotor position. In addition, the FBG sensors 407a-c enable measurement of temperatures close to the windings.

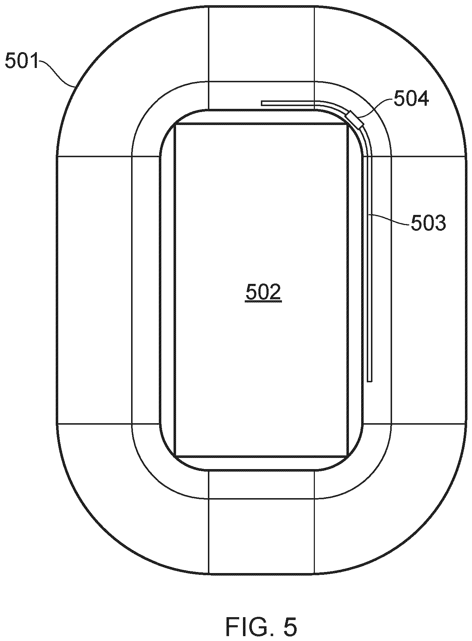

FIG. 5 illustrates an example winding 501 for one of the teeth 402a-f of the stator 401 of FIG. 4, the winding 501 comprising an optical fibre 503 with an FBG 504. The winding 501 is shown in plan view from inside the stator 501, i.e. showing the end winding around the stator tooth 502. The stator tooth 502 is rectangular in section, so the winding 501 is rectangular in form with curved corners. As described above in relation to FIG. 3, the corners of the winding are expected to experience the highest strains, both positive and negative, during operation of the electrical machine. The FBG sensor 504 is therefore positioned at an inner side of the winding 501, positioned adjacent a corner of the tooth 502. In practice, the optical fibre 503 may be incorporated into the conductor prior to forming the winding, with the FBG sensor 504 being positioned such that its location following winding matches the desired location.

Although the end-winding 501 is not as sensitive to faults as other positions around the stator, considering the relative mechanical weakness of end-windings, the FBG sensor 504 mounted at the inner curved part of the end-winding 501 can provide an important means for monitoring end-winding vibration.

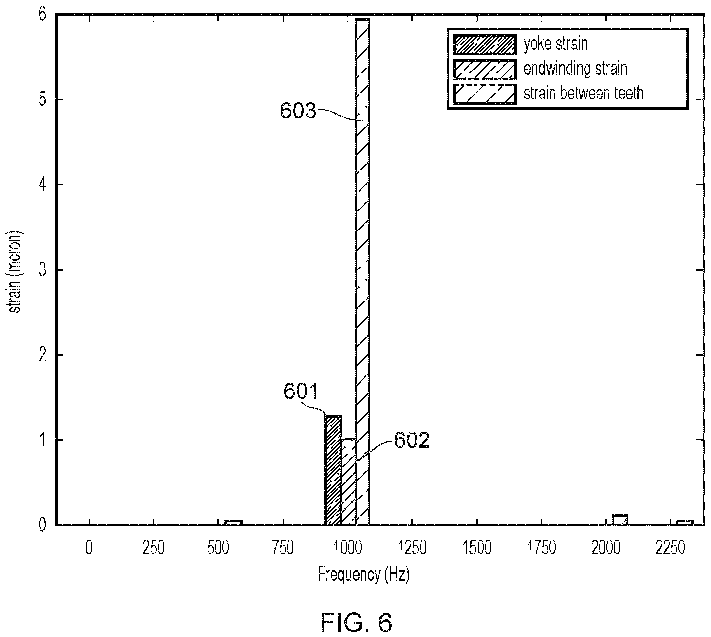

FIG. 6 illustrates a plot of strain against frequency during normal operation of an electric machine, as measured by FBG sensors positioned at the locations mentioned above, i.e. in a first position on the yoke between a pair of stator teeth, in a second position on an end-winding around a stator tooth, and in a third position on a bridging element between a pair of stator teeth. The strain measurements are indicated in FIG. 6 as a yoke strain 601 for the first position, an end-winding strain 602 for the second position and a strain between teeth 603 for the third position. The strain measurements are most prominent at twice the driving frequency, which in this example is at 1000 Hz, with the strain between teeth 603 showing the highest measurement at nearly $6 \times 10^{-6}$ and the other strains 601, 602 measured around $1 \times 10^{-6}$. Each of the strain measurements can therefore be used to accurately measure the operating frequency of the electric machine by determining the frequency at which a maximum peak strain is measured.

Different fault conditions will result in different strain spectra to that shown in FIG. 6. Therefore, by analysing the frequency spectrum of measured strain based on one or more FBG sensors, it may be possible to detect faults, as well as identify the type of fault and its location depending on the number and location of the FBG sensors. The DC components of the FBG signals can be used to infer temperature information. With multiple FBG sensors, this distributed temperature information can also be used as a reference for fault detection.

Four distinct fault types may be determined through the use of FBG sensors: a) an inter-turn short circuit (ITSC) fault, for example in which one coil is half shorted; b) an open circuit (OC) fault, for example in which one whole phase is open-circuit; c) an eccentricity fault, for example in which there is a 50% dynamic eccentricity; and d) a demagnetization fault, for example in which one of the poles is demagnetized. In the examples described herein, the electrical machine is still running at 15,000 rpm with a current of 60A. These machine faults will cause unbalanced conditions and result in extra frequency components. By way of an example, an ITSC fault will tend to induce vibration at $f_{elec}$ (i.e. in this example at 500Hz). Table 1 below summarises the expected changes due to different fault types.

Table 1: Characteristic frequency components of different fault types

| Fault Type | Changes in Frequency Components |
|---|---|
| ITSC fault | extra $f_{elec}$ arises |
| Open-circuit fault | $2f_{elec}$ decreases & no extra components |
| Eccentricity fault | extra $f_{mech}$ arises & $2f_{elec}$ increases |

(continued)

| Fault Type | Changes in Frequency Components |
|---|---|
| Demagnetization fault | extra $f_{mech}$ arises & $2f_{elec}$ decreases |

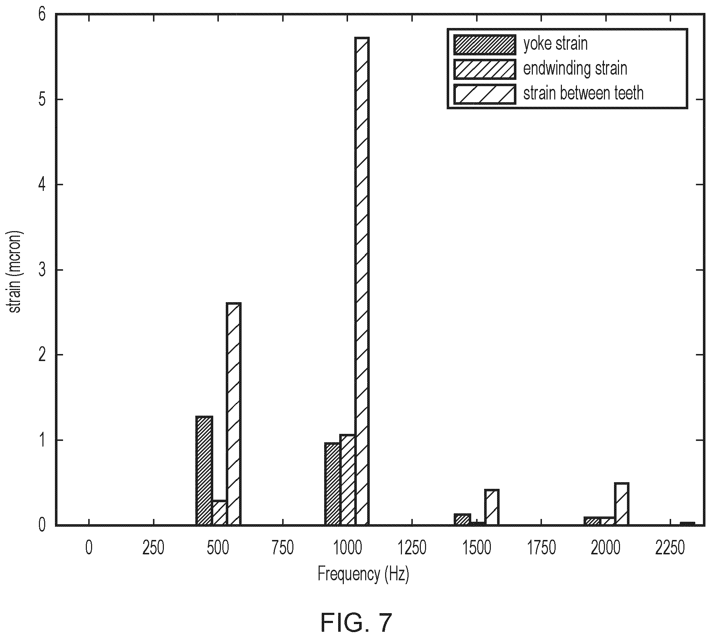

An example spectrum of strains at different positions under an ITSC fault is shown in FIG. 7. As with the strains under normal operation, a peak strain at $2f_{elec}$ (1000 Hz) is evident. Under an ITSC fault, an additional peak strain becomes evident at the electrical frequency $f_{elec}$ (500 Hz). This is more evident for the yoke strain and the strain between teeth, and is less evident for the end-winding strain. Additional peaks are also evident at around 1500 and 2000 Hz, being higher harmonics of the fundamental electrical frequency, but these are substantially smaller than the peak at the fundamental frequency.

It can be seen from the spectrum in FIG. 7 that the strain at the end-winding is not very sensitive to the ITSC fault. This is because the end-winding is not in the active length of the machine and the electromagnetic force induced by such a fault may not have much effect on the end-windings. For the strains that can be measured from the yoke and between the stator teeth, there are clear extra frequency components in spectrum.

The strain between adjacent teeth has the largest magnitudes of both fault-related and fundamental components. However, when comparing the ratio between fault-related (500Hz) and $2f_{elec}$ (1000Hz) components, the strain between teeth is lower than the yoke strain, which means its sensitivity to fault-related components is lower than the yoke strain. The same situation is found under other fault conditions. The reason is that the fault-related force has a different wavelength and direction from that of the electromagnetic force at $2f_{elec}$. The fault-related force is almost unidirectional, while the $2f_{elec}$ component is sinusoidally distributed in space.

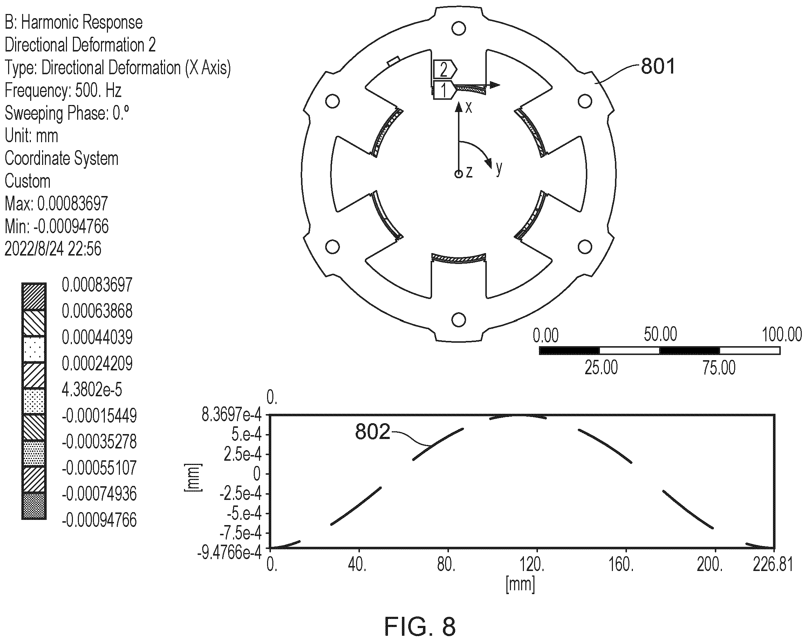

To further illustrate the above, FIG. 8 illustrates finite element modelling of an example stator 801 under a unidirectional force at 500Hz that is induced by a fault, in which the radial deformation 802 of the teeth is plotted as a function of the circumferential position around the stator 801. This radial deformation 801 is consistent with the sinusoidal distribution of the teeth in space.

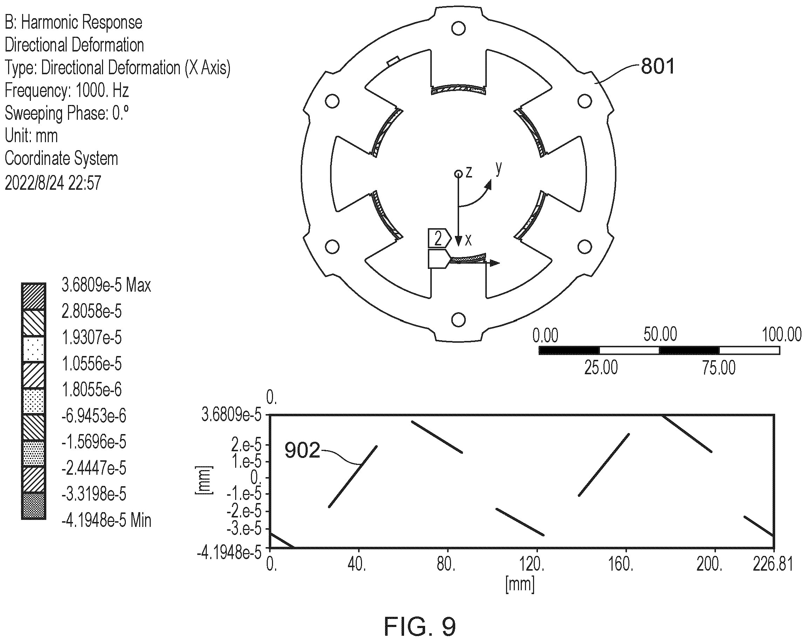

FIG. 9 illustrates the results of finite element modelling of the example stator 801 at twice the fundamental frequency, i.e. at $2f_{elec}$ (1000 Hz in this example). Due to both the electromagnetic force at 1000Hz and the teeth having a sinusoidal distribution in space, the spatial cycle of teeth deformation 902 is halved. The difference in deformation between adjacent tooth edges, and hence the measured strain, is larger.

Therefore, the fault-related force can cause larger machine vibration but with less tangential deformation between adjacent teeth. Since the fault-related strain measured between two adjacent teeth is highly dependent on the tooth spatial distribution, for other machines with more slots so that the teeth have a more compact spatial distribution, the sensitivity of this strain to fault may be reduced further.

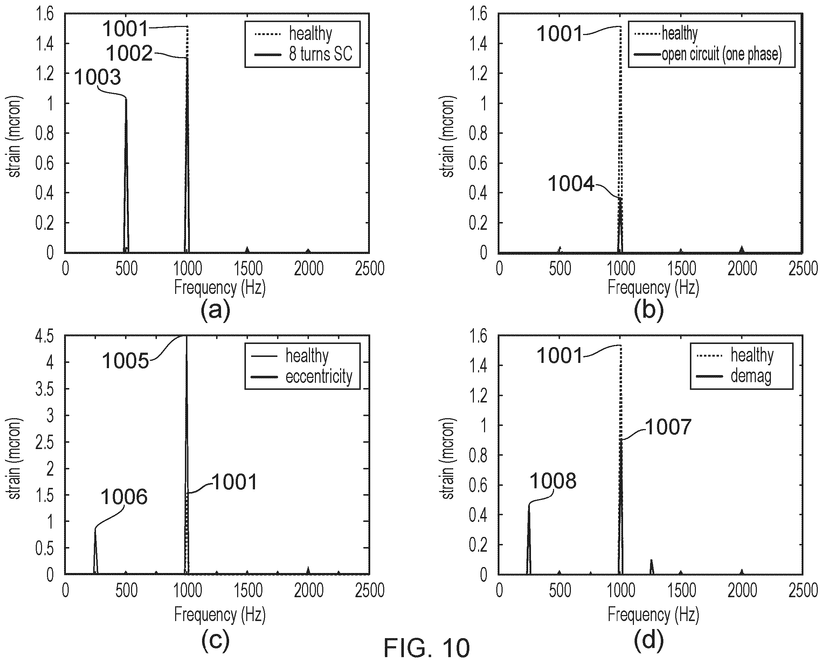

FIG. 10 illustrates example spectra for the yoke strain at a single test point under four different fault conditions, in each case comparing the spectrum for a healthy, i.e. normal operation, mode and a fault mode. In each case, the healthy operating mode results in a peak 1001 at $2f_{elec}$ (1000 Hz) of around $1.5 \times 10^{-6}$.

In FIG. 10a, the effect of an ITSC fault is that the main peak 1001 at $2f_{elec}$ (1000 Hz) is reduced to a lower peak 1002 and a prominent second peak 1003 at $f_{elec}$ appears, in this case having a peak strain of around $1 \times 10^{-6}$. To detect an ITSC fault therefore, in a general aspect a ratio between a peak strain 1003 at an operating electrical frequency and a peak strain 1002 at twice the operating electrical frequency of the electrical machine is determined. If this ratio is greater than a predetermined threshold value, an inter-turn short circuit fault may be detected. The ratio between the peaks in FIG. 10a under fault is around 1/1.3, i.e. around 0.77, while the ratio under normal operation is near zero. The predetermined threshold value for detecting an ITSC fault may therefore be a value between around 0.1 and 0.7.

In FIG. 10b, the effect of an open circuit fault in a single phase is shown, which in this example results in the peak 1001 under normal operation reducing to a lower peak 1004, which in this example is a peak strain of around $0.35 \times 10^{-6}$ compared to a peak strain of around $1.5 \times 10^{-6}$ in normal operating mode. In a general aspect therefore, to detect an open circuit fault a peak strain 1004 at twice the operating electrical frequency of the electrical machine may be measured and compared to a predetermined peak strain 1001, i.e. under normal operating conditions. If the peak strain 1004 is lower than the predetermined peak strain by more than a predetermined factor, an open circuit fault may be determined. Given that the peak strain reduces by a factor of around 75% in the example in FIG. 10b, the predetermined factor may for example be a factor between around 25 and 75%. This may optionally be combined with a measure of the peak strain at the operating frequency, since there is no prominent peak at the operating frequency in FIG. 10b. A more robust measure of an open circuit fault may be determined if, in addition to the peak 1004 being reduced by more than the predetermined factor, a ratio between a peak strain at the operating electrical frequency and the peak strain at twice the operating electrical frequency of the electrical machine is below the predetermined threshold value, for example below a value between 0.1 and 0.5.

The spectrum in FIG. 10c illustrates the effect of an eccentricity fault, which results in a substantially increased strain peak 1005 at twice the operating electrical frequency (1000 Hz), in this example rising from around 1.5 to around 4.5

$\times 10^{-6}$. In addition, a further peak strain 1006 arises at the mechanical frequency of the electrical machine, i.e. in this example around 250 Hz. In a general aspect therefore, to detect an eccentricity fault a peak strain 1005 at twice the operating electrical frequency of the electrical machine may be measured and compared to a predetermined peak strain 1001, i.e. under normal operating conditions. If the peak strain 1005 is higher than the predetermined peak strain by a predetermined factor, an eccentricity fault may be determined. The predetermined factor may for example be a value between around 2 and 3, i.e. the peak strain increases by more than 100%. The eccentricity fault may be confirmed by a rise in a peak at the mechanical frequency of the electrical machine, i.e. the peak 1006 in FIG. 10c.

The spectrum in FIG. 10d illustrates the effect of a demagnetization fault, which results in the strain peak 1001 under normal operation reducing to a strain peak 1007, the reduction being around 40% from around 1.5 to around 0.9 $\times 10^{-6}$. In addition, a further peak 1008 at the mechanical frequency of the electrical machine, i.e. in this example around 250 Hz, arises. In a general aspect therefore, to detect a demagnetization fault a peak strain 1007 at twice the operating electrical frequency of the electrical machine may be measured and compared to a predetermined peak strain 1001, i.e. under normal operating conditions. If the peak strain 1007 is lower then the predetermined peak strain by more than a predetermined factor, a demagnetization fault may be determined. The predetermined factor may for example be a value between around 25% and 50%. The demagnetization fault may be confirmed by a rise in a peak at the mechanical frequency, i.e. the peak 1008 in FIG. 10d. The rise in the peak at the mechanical frequency may be determined by the peak 1008 being above a predetermined threshold, which may for example be above a ratio compared to the peak 1007 at twice the operating frequency. The ratio may for example be a value above around 0.1.

The above described methods of detecting different faults may be automated, i.e. performed as a computer-implemented method, by automatically performing spectral analysis on strain measurements taken from one or more FBG sensors on the stator and calculations performed based on detection of peaks in the spectrum. An output of the method may be to provide an automated output signal indicating the type of fault detected.

As described herein, FBG sensors can be placed at critical positions in the stator of an electrical machine (e.g., stator teeth, yoke and end-windings) which are sensitive to both mechanical and electrical faults. Also, one fibre can have many FBG sensing elements to obtain a distributed strain or temperature sensing of these positions. Therefore, the use of FBG sensors may allow for the comprehensive health monitoring of electric machines.

By favourably positioning FBG sensors around the stator, and in particular by performing spectral analysis of signals from these FBG sensors, it is possible to obtain both temperature and vibration information, and further to deduce different types of machine fault, including both mechanical and electrical faults.

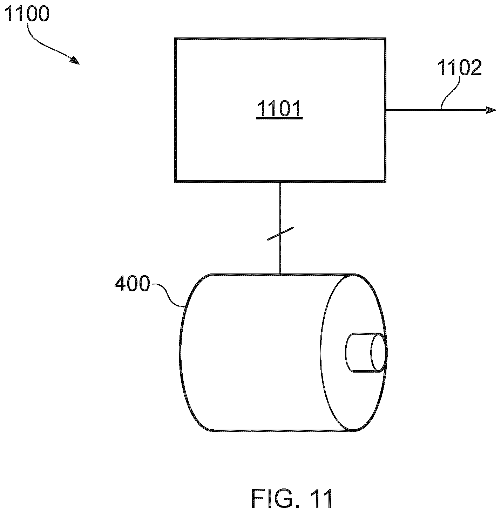

FIG. 11 illustrates schematically an example system 1100 for monitoring an electrical machine 400, the electrical machine being of the kind described above incorporating one or more FBG sensors in the stator. The controller 1101 is configured to receive sensor information from the FBG sensors and optionally also control operation of the electrical machine 400. The controller processes the FBG sensor information and determines the condition of the electrical machine 400 based on the sensor information. The controller 1101 may provide an output 1102 indicating the presence or absence of a fault in the electrical machine 400. The controller 1101 may also be configured to determine a distribution of strains and temperature within the electrical machine 400, depending on the number and location of FBG sensors in the electrical machine 400.

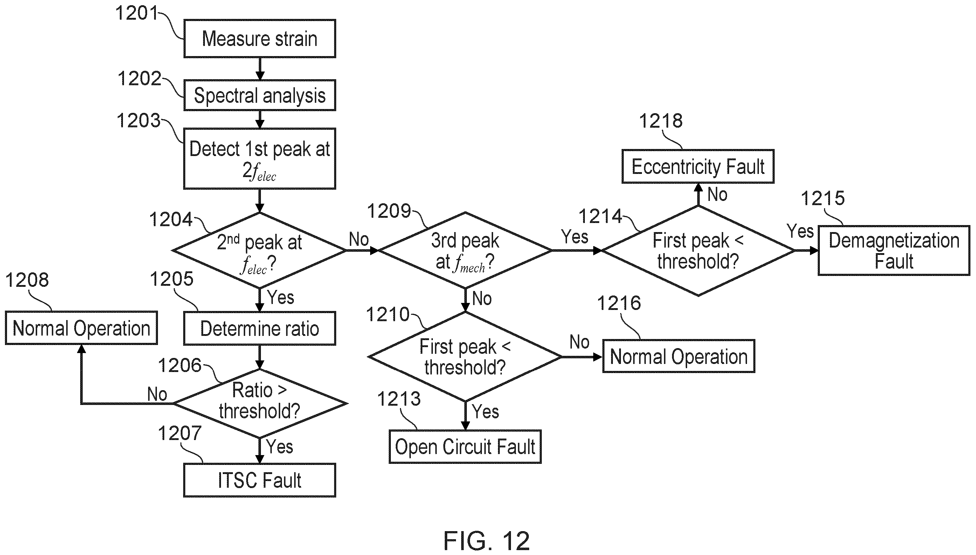

FIG. 12 illustrates an example method of determining the condition of an electrical machine, which may be carried out by the controller 1101 of FIG. 11. In a first step 1201, a strain in the stator is measured from an FBG over a frequency range. In a second step 1202, spectral analysis is performed on the strain measurement, for example by using a Fourier transform on the measurement information, to determine one or more strain peaks. In a third step 1203, a first peak strain at twice the operating electrical frequency of the electrical machine is detected. Decisions are then made depending on this first peak strain as to the condition of the electrical machine.

At step 1204, if a second peak at the operating electrical frequency $f_{elec}$ is detected, a ratio is determined at step 1205 between the second and first peaks. If, at step 1206, the ratio is above a threshold, an ITSC fault is detected at step 1207. Otherwise, the electrical machine is determined to be in normal operation (step 1208).

If, at step 1204, a second peak at $f_{elec}$ is not detected, at step 1209 a third peak at $f_{mech}$ is checked for. If this peak is not present, at step 1210 a determination is made as to whether the first peak is below a predetermined threshold. If so, an open circuit fault is detected at step 1213. Otherwise, normal operation is detected at step 1216.

If, at step 1209, the third peak at $f_{mech}$ is detected, at step 1214 a determination is made as to whether the first peak is below a predetermined threshold. If so, a demagnetization fault is detected at step 1215. Otherwise, an eccentricity fault is detected at step 1218.

After normal operation is detected at steps 1208 or 1216, the process may repeat, starting from step 1201 again.

If a fault is detected at steps 1207, 1208, 1215 or 1218, an output may be provided to a user indicating the type of fault. The controller may optionally also halt operation of the electrical machine, if it is safe to do so.

Claims

1. An electrical machine (400) comprising:

   a stator (401) having a plurality of stator teeth (402a-f) having windings around each tooth (402a-f);
   a rotor (403) rotatably mounted within the stator (401); and
   an optical fibre (404, 405) mounted to the stator (401),
   wherein the optical fibre (404, 405) comprises a Fibre Bragg Grating, FBG (406a-c, 407a-c), positioned between an adjacent pair of stator teeth (402c, 402b; 402a, 402f; 402e, 402d) and oriented to measure a tangential strain between the pair of stator teeth (402c, 402b; 402a, 402f; 402e, 402d).

2. The electrical machine (400) of claim 1, wherein the FBG (404) is attached to a yoke (408) of the stator (401) and positioned between roots of the pair of adjacent stator teeth (402c, 402b; 402a, 402f; 402e, 402d).

3. The electrical machine (400) of claim 2, wherein the optical fibre is a first optical fibre (404) attached to and extending around the stator (401), the first optical fibre (404) comprising a first plurality of FBGs (406a-c), each FBG being positioned between roots of a pair of adjacent stator teeth (402c, 402b; 402a, 402f; 402e, 402d).

4. The electrical machine (400) of claim 1, wherein the FBG (407a-c) is attached to a bridging element (409a-f) connecting inner ends of the pair of adjacent stator teeth (402c, 402b; 402a, 402f; 402e, 402d).

5. The electrical machine (400) of claim 4, wherein the optical fibre (405) is attached to and extends around the stator (401), the optical fibre (405) comprising a plurality of FBGs (407a-c), each FBG (407a-c) being attached to a bridging element (409a-f) connecting a pair of adjacent stator teeth (402c, 402b; 402a, 402f; 402e, 402d).

6. The electrical machine (400) of claim 3, further comprising a second optical fibre (405) attached to and extending around the stator (401) and comprising a second plurality of FBGs (407a-c), each FBG being attached to a bridging element (409a-f) connecting a pair of adjacent stator teeth (402c, 402b; 402a, 402f; 402e, 402d).

7. The electrical machine (400) of claim 6, further comprising a third optical fibre (503) mounted to a winding (501) around a tooth (402a-f, 502) of the stator (401), the third optical fibre (503) comprising an FBG (504).

8. The electrical machine (400) of claim 7, wherein the FBG (504) of the third optical fibre (503) is positioned at an inner side of the winding (501).

9. A method of monitoring an electrical machine (400) comprising:

   a stator (401) having a plurality of stator teeth (402a-f) having windings around each tooth (402a-f);
   a rotor (403) rotatably mounted within the stator (401); and
   an optical fibre (404, 405) mounted to the stator (401), the optical fibre (404, 405) comprising a Fibre Bragg Grating, FBG (406a-c, 407a-c), positioned between an adjacent pair of stator teeth (402c, 402b; 402a, 402f; 402e, 402d) and oriented to measure a tangential strain between the pair of stator teeth (402c, 402b; 402a, 402f; 402e, 402d),
   the method comprising:

   measuring a strain in the stator from the FBG over a frequency range;
   determining a first peak strain (1002, 1004, 1005, 1007) at a frequency twice that of an operating electrical frequency of the electrical machine; and
   based on the first peak strain, determining a presence or absence of a type of fault in the electrical machine (400).

10. The method of claim 9, wherein the method comprises:

    determining a ratio between a second peak strain (1003) at the operating electrical frequency and the first peak strain (1002); and
    detecting an inter-turn short circuit fault if the ratio is greater than a predetermined threshold value.

11. The method of claim 9, wherein the method comprises:

comparing the first peak strain (1004) to a predetermined peak strain (1001); and
detecting an open circuit fault if the first peak strain (1004) is lower than the predetermined peak strain (1001) by more than a predetermined factor.

12. The method of claim 11, wherein the predetermined factor is between around 25 and 75% and the predetermined peak strain is a measure of the first peak strain in the absence of a fault.

13. The method of claim 9, wherein the method comprises:

comparing the first peak strain (1005) to a predetermined peak strain (1001); and
detecting an eccentricity fault if the first peak strain (1005) is higher than the predetermined peak strain (1001) by more than a predetermined factor and a second peak strain (1006) at a mechanical frequency of the electrical machine (400) is above a predetermined threshold value.

14. The method of claim 9, wherein the method comprises:

comparing the first peak strain (1007) to a predetermined peak strain (1001); and
detecting a demagnetization fault if the first peak strain (1007) is lower than the predetermined peak strain (1001) by more than a predetermined factor and a second peak strain (1008) at a mechanical frequency of the electrical machine is above a predetermined threshold value

15. The method of claim 14, wherein the predetermined factor is between around 25 and 50% and the predetermined peak strain is a measure of the first peak strain in the absence of a fault.

FIG. 1

B: Harmonic Response
Normal Elastic Strain
Type: Normal Elastic Strain(Y Axis)
Frequency: 1000. Hz
Sweeping Phase: 120.°
Unit: mm/mm
Coordinate System
Custom
Max: 6.8681e-7
Min: -5.9649e-7

6.8681e-7
5.4423e-7
4.0164e-7
2.5905e-7
1.1646e-7
-2.6132e-8
-1.6872e-7
-3.1131e-7
-4.539e-7
-5.9649e-7

FIG. 2

B: Harmonic Response
Normal Elastic Strain 6
Type: Normal Elastic Strain(Y Axis)
Frequency: 500. Hz
Sweeping Phase: 120.°
Unit: mm/mm
Coordinate System
Custom
Max: 7.672e-7
Min: -1.4899e-6

2.983e-7
2.3993e-7
1.8155e-7
1.2318e-7
6.4801e-8
6.426e-9
-5.1949e-8
-1.1032e-7
-1.687e-7
-2.27708e-7

302

301

103

x

z

y

FIG. 3

FIG. 4

FIG. 5

FIG. 6

FIG. 7

B: Harmonic Response
Directional Deformation 2
Type: Directional Deformation (X Axis)
Frequency: 500. Hz
Sweeping Phase: 0.º
Unit: mm
Coordinate System
Custom
Max: 0.00083697
Min: -0.00094766
2022/8/24 22:56

0.00083697
0.00063868
0.00044039
0.00024209
4.3802e-5
-0.00015449
-0.00035278
-0.00055107
-0.00074936
-0.00094766

801

0.00          50.00          100.00
25.00          75.00

802

8.3697e-4
5.e-4
2.5e-4
0
-2.5e-4
-5.e-4
-7.5e-4
-9.4766e-4

[mm]

0.

0.    40.    80.    120.    160.    200.    226.81
[mm]

FIG. 8

EP 4 546 620 A1

B: Harmonic Response
Directional Deformation
Type: Directional Deformation (X Axis)
Frequency: 1000. Hz
Sweeping Phase: 0.º
Unit: mm
Coordinate System
2022/8/24 22:57

801

3.6809e-5 Max
2.8058e-5
1.9307e-5
1.0556e-5
1.8055e-6
-6.9453e-6
-1.5696e-5
-2.4447e-5
-3.3198e-5
-4.1948e-5 Min

0.00    50.00    100.00
25.00    75.00

902

FIG. 9

FIG. 10

1100

1101

1102

400

FIG. 11

EP 4 546 620 A1

1201 — Measure strain

1202 — Spectral analysis

1203 — Detect 1st peak at $2f_{elec}$

1204 — 2nd peak at $f_{elec}$?

No → 1209 — 3rd peak at $f_{mech}$?

Yes → 1214 — First peak < threshold?

No → 1218 — Eccentricity Fault

Yes → 1215 — Demagnetization Fault

1204 Yes → 1205 — Determine ratio

1206 — Ratio > threshold?

No → 1208 — Normal Operation

Yes → 1207 — ITSC Fault

1209 No → 1210 — First peak < threshold?

No → 1216 — Normal Operation

Yes → 1213 — Open Circuit Fault

FIG. 12

Europäisches
Patentamt
European
Patent Office
Office européen
des brevets

# EUROPEAN SEARCH REPORT

Application Number

EP 24 20 3139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/026482 A1 (DAILEY GEORGE FRANKLIN [US]) 2 February 2012 (2012-02-02) * paragraphs [0039] - [0041]; figures 1,5,6 * | 1-9 | INV. H02K11/20 H02K15/00 |
| X | US 2019/383271 A1 (ROSENBUSCH PETER [FR]) 19 December 2019 (2019-12-19) * paragraphs [0014] - [0017]; figures 1-8 * | 1-9 | |
| X | FABIAN M ET AL: "Vibration measurement of electrical machines using integrated fibre Bragg gratings", 20150928, vol. 9634, 28 September 2015 (2015-09-28), pages 963417-963417, XP060057186, DOI: 10.1117/12.2194596 | 1-9, 13-15 | |
| Y | * pages 2,3; figures 1,2 * | 10-12 | |
| X | SOUSA KLEITON MORAIS ET AL: "Dynamic Eccentricity Induced in Induction Motor Detected by Optical Fiber Bragg Grating Strain Sensors", IEEE SENSORS JOURNAL, IEEE, USA, vol. 16, no. 12, 1 June 2016 (2016-06-01), pages 4786-4792, XP011610618, ISSN: 1530-437X, DOI: 10.1109/JSEN.2016.2554885 [retrieved on 2016-05-17] | 1-9, 13-15 | TECHNICAL FIELDS SEARCHED (IPC) H02K |
| Y | * pages 2-5; figures 3,4 * | 10-12 | |

-/--

The present search report has been drawn up for all claims

| Place of search | Date of completion of the search | Examiner |
|---|---|---|
| The Hague | 14 March 2025 | Ganchev, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 24 20 3139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FABIAN MATTHIAS ET AL: "Comprehensive Monitoring of Electrical Machine Parameters Using an Integrated Fiber Bragg Grating-Based Sensor System", JOURNAL OF LIGHTWAVE TECHNOLOGY, IEEE, USA, vol. 36, no. 4, 15 February 2018 (2018-02-15), pages 1046-1051, XP011677823, ISSN: 0733-8724, DOI: 10.1109/JLT.2017.2771143 [retrieved on 2018-02-15] * pages 2,3; figures 1,2 * | 1-6,9 | |
| A | US 2013/278918 A1 (GLAVIND LARS [DK] ET AL) 24 October 2013 (2013-10-24) * paragraphs [0068] - [0075]; figures 1-7 * | 1-15 | |
| Y | GHERABI ZAKARIA ET AL: "Modeling and Diagnosis of Stator Winding Faults in PMSM using Motor Current Signature Analysis", 2019 INTERNATIONAL AEGEAN CONFERENCE ON ELECTRICAL MACHINES AND POWER ELECTRONICS (ACEMP) & 2019 INTERNATIONAL CONFERENCE ON OPTIMIZATION OF ELECTRICAL AND ELECTRONIC EQUIPMENT (OPTIM), IEEE, 27 August 2019 (2019-08-27), pages 227-232, XP033721851, DOI: 10.1109/ACEMP-OPTIM44294.2019.9007162 [retrieved on 2020-02-21] * page 1, column 2 * | 10-12 | TECHNICAL FIELDS SEARCHED (IPC) |

The present search report has been drawn up for all claims

| Place of search | Date of completion of the search | Examiner |
|---|---|---|
| The Hague | 14 March 2025 | Ganchev, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3139

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | Publication date | Patent family member(s) | | Publication date |
|---|---|---|---|---|
| US 2012026482 A1 | 02-02-2012 | NONE | | |
| US 2019383271 A1 | 19-12-2019 | BR | 112019015809 A2 | 31-03-2020 |
| | | CA | 3051324 A1 | 07-09-2018 |
| | | CN | 110383000 A | 25-10-2019 |
| | | DE | 102017104329 A1 | 06-09-2018 |
| | | EP | 3589915 A1 | 08-01-2020 |
| | | JP | 2020508633 A | 19-03-2020 |
| | | KR | 20190117773 A | 16-10-2019 |
| | | US | 2019383271 A1 | 19-12-2019 |
| | | WO | 2018158279 A1 | 07-09-2018 |
| US 2013278918 A1 | 24-10-2013 | CN | 103314277 A | 18-09-2013 |
| | | EP | 2643663 A1 | 02-10-2013 |
| | | ES | 2534103 T3 | 17-04-2015 |
| | | GB | 2485808 A | 30-05-2012 |
| | | US | 2013278918 A1 | 24-10-2013 |
| | | WO | 2012069058 A1 | 31-05-2012 |

EPO FORM P0459

For more details about this annex : see Official Journal of the European Patent Office, No. 12/82

**REFERENCES CITED IN THE DESCRIPTION**

**Patent documents cited in the description**

- EP 3150983 A